Europäisches Patentamt

European Patent Office

Office européen des brevets

(19)

(11) **EP 0 527 123 B1**

(12) **EUROPÄISCHE PATENTSCHRIFT**

(45) Veröffentlichungstag und Bekanntmachung des Hinweises auf die Patenterteilung:
**10.01.1996 Patentblatt 1996/02**

(51) Int. Cl.$^6$: **C02F 3/30**, C02F 3/12

(21) Anmeldenummer: **92890179.2**

(22) Anmeldetag: **05.08.1992**

(54) **Belebtschlammverfahren zur Reinigung von Abwasser**

Activated sludge wastewater treating process

Procédé de traitement d'eaux usées en boue activée

(84) Benannte Vertragsstaaten:
**BE DE DK ES FR GB GR IT LU NL PT SE**

(30) Priorität: **06.08.1991 AT 1560/91**

(43) Veröffentlichungstag der Anmeldung:
**10.02.1993 Patentblatt 1993/06**

(73) Patentinhaber:
• **AUSTRIAN ENERGY & ENVIRONMENT SGP/WAAGNER-BIRO GmbH**
  **A-1210 Wien (AT)**
• **Matsché, Norbert, Univ. Prof. Dr.**
  **A-2340 Mödling (AT)**

(72) Erfinder:
• **Matsché, Norbert, Prof. Dr.**
  **A-2340 Mödling (AT)**
• **Guan, Liang, Dr.**
  **A-1030 Wien (AT)**

(74) Vertreter: **Wallner, Gerhard, Dipl.-Ing.**
  **A-1221 Wien (AT)**

(56) Entgegenhaltungen:
EP-A- 0 014 394          DE-A- 2 640 875
DE-A- 3 833 185          FR-A- 2 160 799
FR-A- 2 456 712

**Beschreibung**

Die Erfindung betrifft ein Belebtschlammverfahren zur Reinigung von Abwasser, bei dem das Abwasser in ein erstes Belebungsbecken mit Zwischenklärung eingeführt wird, im Anschluß daran in ein zweites Belebungsbecken mit Nachklärung eingeführt und danach abgeführt wird, bei dem Schlamm aus der Zwischenklärung in das erste Belebungsbecken und aus der Nachklärung in das zweite Belebungsbecken rückgeführt, sowie Überschußschlamm aus wenigstens einer Belebungsstufe aus dem Schlammkreislauf entfernt wird.

Ein bekanntes Verfahren dieser Art ist das herkömmliche zweistufige Belebtschlammverfahren (Doktor W. Lindner, „Das zweistufige Belebungsverfahren in der Abwasserreinigung" (Kempten 1957), Thomas-Verlag). Bei diesem Verfahren wird in der ersten Belebungsstufe bei hoher Schlammbelastung die Substratatmung, bei der die Mikroorganismen durch Oxidation organischer Verbindungen Sauerstoff verbrauchen und folglich der biologische Abbau von Kohlenstoffverbindungen im Vordergrund steht, voll wirksam. Die zweite Belebungsstufe wird bei diesem bekannten Verfahren im allgemeinen mit einer niedrigen Schlammbelastung betrieben, wodurch ein Abbau der verbliebenen Kohlenstoffverbindungen und die Oxidation von Stickstoffverbindungen (Nitrifikation) stattfindet.

Für gewöhnlich wird das bekannte, zweistufige Belebungsverfahren mit einer Schlammbelastung von 0,8 bis 2,0 kg $BSB_5$/kg Trockensubstanz und Tag der ersten Stufe und von 0,15 bis 0,3 kg $BSB_5$/kg Trockensubstanz und Tag in der zweiten Belebungsstufe betrieben (Lehr- und Handbuch der Abwassertechnik, herausgegeben von der Abwassertechnischen Vereinigung e.V. in St. Augustin, Berlin Ernst Verlag, Seite 426, Bd. IV, 3. Auflage, 1985). Bei der nach diesem Verfahren typischen Arbeitsweise erfolgt wie beschrieben, der überwiegende Kohlenstoffabbau in der ersten Stufe und eine weitgehende Nitrifikation in der zweiten Stufe. Eine Denitrifikation ist in der zweiten Stufe zufolge des Fehlens von leicht abbaubarem Kohlenstoffsubstrat nicht mehr möglich. Der Abzug von Überschußschlamm aus der Gesamtanlage erfolgt entweder aus der Vorklärung vor der ersten Stufe oder bei fehlender Vorklärung aus dem Schlammkreislauf der ersten Stufe. Der Überschußschlamm der zweiten Stufe wird gemeinsam mit dem Schlamm der ersten Stufe abgezogen, wobei es zu keiner gezielten Stickstoffentfernung kommt, weil in der ersten Stufe anoxische Bedingungen nicht vorliegen.

Bei einem aus der FR-A-2 160,799 bekannten Verfahren zur Elimination von organisch und anorganisch gebundenem Stickstoff aus häuslichem und industriellem Abwasser wird zur Denitrifikation des in der zweiten Verfahrensstufe nitrifizierten Ammoniums und damit zur Elimination von Nitratstickstoff aus dem zu reinigenden Abwasser dem Absetzbecken der zweiten Verfahrensstufe nitrifiziertes Abwasser entnommen und in eine Leitung eingespeist, durch die Abwasser aus dem Belüftungsbecken der ersten Stufe in das Nachklärbecken der ersten Stufe eingeleitet wird. Bei dem bekannten Verfahren findet in der ersten Verfahrensstufe (Belüftungsbecken und Absetzbecken) ausschließlich eine Denitrifikation und in der zweiten Verfahrensstufe ausschließlich eine Nitrifikation statt.

Bei dem aus der DE-A-31 36 409 bekannten Verfahren sind zwei Anlagen, also zwei gleichrangige Stufen zur Nitrifikation parallelgeschaltet. Hiebei sollen in der Nebennitrifikationsstufe für das Nitrifizieren besonders günstige Bedingungen eingehalten werden, damit bei Störungen in der Hauptnitrifikationsstufe keine Unterbrechung der Nitrifikation eintritt, sondern bei Bedarf aus der Nebennitrifikationsstufe dort in Reserve gehaltene Biologie, d.h. nitrifizierende Mikroorganismen in die Hauptstufe eingeleitet werden können, so daß dort die Nitrifikation im wesentlichen ohne Unterbrechung wieder fortgesetzt werden kann, wenn einmal eine Störung aufgetreten ist.

Die WO 83/00856 beschreibt ein Schlammbehandlungsverfahren, bei dem nur Kohlenstoffverbindungen abgebaut werden sollen und bei dem keine Nitrifikation und auch keine Denitrifikation durchgeführt wird. Bei diesem Verfahren wird aus einem Voreindicker behandelter Schlamm in eine Aerobbehandlungsstufe zur aeroben Behandlung zugeführt. Der Auslauf aus der Aerobbehandlungsstufe wird einer Anerobbehandlungsstufe für einen Faulungsprozeß zugeführt, in dem weitere Abbauvorgänge stattfinden. Ein Teil des Substrates wird gemäß der WO 83/00856 aus der Anaerobbehandlungsstufe in die Aerobbehandlungsstufe rückgeführt. Dabei entstehen keine Mischbiozönosen, da die in der Aerobbehandlungsstufe wirksame Bakterien in der Anaerobbehandlungsstufe nicht lebensfähig sind und umgekehrt.

Bei einem aus der DE-C 26 40 875 bekannten und unter dem Namen "AB-Verfahren" bekannten Verfahren handelt es sich um ein zweistufiges Abwasserreinigungsverfahren, bei dem die erste Stufe als Adsorptionsstufe sehr hoch belastet ist (Schlammbelastung 2,0 bis 10,0 kg $BSB_5$/kg Trockensubstanz und Tag) und dem Abbau bzw. der Adsorption von Kohlenstoffverbindungen dient. Die zweite Stufe arbeitet mit einer Schlammbelastung von O,15 bis 0,30 kg $BSB_5$/kg Trockensubstanz und Tag und dient der Nitrifikation. Eine Denitrifikation ist bei diesem Verfahren nur in der zweiten Stufe und nur in Abhängigkeit vom Einbringen von in der ersten Stufe nicht eliminierten Kohlenstoffverbindungen möglich, was betrieblich schlecht gesteuert werden kann. Bei dem bekannten Verfahren sollen die Biozönosen der ersten und der zweiten Stufe streng voneinander getrennt bleiben, um den Vorteil der Entfernung von Kohlenstoffverbindungen in der ersten Stufe durch geringen Energieeinsatz mit Adsorption zu gewährleisten.

Die Reinigung von Abwasser mit Nitrifikation und Denitrifikation in Belebungsanlagen kann prinzipiell in einstufigen und zweistufigen Anlagen vorgenommen werden.

Um eine gesicherte Nitrifikation zu erzielen, ist es erforderlich, in der Anlage in Abhängigkeit von der Temperatur des Abwassers ein bestimmtes Schlammalter einzuhalten, damit die langsam wachsenden nitrifizierenden Bakterien im belebten Schlamm auch tatsächlich vorhanden sind und nicht ausgewaschen werden. Das Schlammalter in einer Belebungsanlage wird aber maßgeblich durch die Belastung des Abwassers mit Kohlenstoffverbindungen beeinflußt, da die nitrifizierenden Bakterien nur einen geringen Anteil an der gesamten Biomasse ausmachen (weniger als 5%).

Durch diese Bedingungen wird die Größe einer einstufigen Belebungsanlage für die Abwasserreinigung mit Nitrifikation vorwiegend durch die Belastung mit abbaubaren Kohlenstoffverbindungen bestimmt.

Bei zweistufigen Verfahren kann durch den weitgehenden Abbau der Kohlenstoffverbindungen in der ersten Stufe ohne Nitrifikation und nachfolgender Behandlung des vorgereinigten Abwassers in der zweiten Stufe eine gute Voraussetzung für die Nitrifikation in dieser zweiten Stufe geschaffen werden, da nach Entfernung der Kohlenstoffverbindungen mit hohem Schlammalter auch bei vergleichsweise kleinen Beckenvolumina gearbeitet werden kann.

Für die Entfernung von Stickstoffverbindungen aus dem Abwasser ist jedoch nach der bei der Nitrifikation erfolgten Oxidation von reduzierten Stickstoffverbindungen ($NH_4+$) zu Nitrat die Reduktion von Nitrat zu gasförmigem Stickstoff (Denitrifikation) förderlich, die unter Abwesenheit von gelöstem, d.h. freiem Sauerstoff unter Verwendung des an das Nitrat gebundenen Sauerstoffs erfolgt (anoxische Bedingungen). Bei einstufigen Anlagen kann dies durch entsprechende Gestaltung der Becken und Anpassung der Sauerstoffzufuhr erreicht werden, so daß es zur Ausbildung von aeroben und anoxischen Bedingungen kommt. Die Einbeziehung der Denitrifikation in das Verfahren bedingt jedoch eine weitere Vergrößerung des erforderlichen Beckenvolumens.

Die Einbeziehung der Denitrifikation bei zweistufigen Anlagen ist zwar grundsätzlich möglich, jedoch ist durch die räumliche Trennung des Abbaues der Kohlenstoffverbindungen in der ersten Stufe und der Nitrifikation in der zweiten Stufe die Verfügbarkeit von Kohlenstoffverbindungen, die für die Reduktion des gebildeten Nitrates bei der Denitrifikation benötigt werden, nur mehr sehr gering. Eine wirksame Denitrifikation ist bei konventionellen zweistufigen Verfahren nur durch Rezirkulation von nitrifiziertem, im wesentlichen schlammfreiem Ablauf aus der Nachklärung in die erste Stufe und der Ausbildung anoxischer Bedingungen in dieser möglich (vgl. Wilhelm v.d. Emde "Betriebsweise von Belebungsanlagen" in Wiener Mitteilungen Wasser - Abwasser - Gewässer Bd. 81 - Wien 1990 II. Auflage).

Die Denitrifikation beim zweistufigen AB-Verfahren (DE-C-26 40 875) kann nur durch Einschränkung der Kohlenstoffentfernung in der ersten Hochlaststufe, z.B. durch Verminderung der Luftzufuhr, und damit durch Verlagerung der Kohlenstoffentfernung in die zweite Stufe ebenfalls unter Einhaltung anoxischer Bedingungen erzielt werden. Eine Rezirkulation von Ablauf der zweiten Stufe in die als Höchstlaststufe ausgebildete, erste Stufe ist wegen der kurzen Verweilzeiten wenig zielführend. Andererseits geht aber durch die Einschränkung der Kohlenstoffentfernung in der ersten Stufe der Vorteil hinsichtlich der Einhaltung optimaler Bedingungen bei der Nitritrifikation verloren.

Zusammenfassend kann also für die derzeit angewandten Betriebsweisen bei Belebungsverfahren gesagt werden, daß beim einstufigen Verfahren mit der Ausbildung einer Mischbiozönose für Kohlenstoffabbau, Nitrifikation und Denitrifikation gute Bedingungen für die Erzielung guter Ablaufwerte herrschen, der hiefür benötigte Volumsbedarf für Belebungsbecken ist jedoch verhältnismäßig groß, z.B. 200 l/EGW (Liter/Einwohnergleichwert). Bei den zweistufigen Verfahren liegen durch den Abbau der Kohlenstoffverbindungen in der ersten Stufe in der zweiten Stufe im allgemeinen zwar die besseren Bedingungen für die Nitrifikation vor. Für die Denitrifikation müssen jedoch erhebliche Volumsströme rückgeleitet werden, was zu einer wesentlichen Belastung der Absetzbecken nach den Belebungsbecken der ersten bzw. der zweiten Stufe führt. Eine Verminderung der Abbauwirkung der ersten Stufe (beim AB-Verfahren) andererseits bedeutet einen teilweisen Verzicht auf die Vorteile hinsichtlich der Nitrifikation in der zweiten Stufe und ist nur mit hohem Betriebsaufwand unter Verminderung der Sauerstoffzufuhr und der Gefahr von Geruchsemissionen zu erreichen.

Die Erfindung stellt sich die Aufgabe, ein Verfahren der eingangs genannten Gattung anzugeben, bei dem die Vorteile der einstufigen und der zweistufigen Verfahrensweise miteinander kombiniert werden.

Erfindungsgemäß wird dies bei einem Verfahren der eingangs genannten Gattung dadurch erreicht, daß das erste und zweite Belebungsbecken nur teilweise belüftet sind und sowohl ein Teil des in der ersten Belebungsstufe gebildeten, Überschußschlammes in die zweite Belebungsstufe als auch wenigstens ein Teil des in der zweiten Belebungsstufe gebildeten, Überschußschlammes in die erste Belebungsstufe übergeführt wird so daß sowohl in der ersten Belebungsstufe als auch in der zweiten Belebungsstufe neben dem Abbau von Kohlenstoffverbindungen ein Abbau von Stickstoffverbindungen durch Nitirifikation und Denitrifikation ausgeführt wird. Vorteilhafte und bevorzugte Varianten des erfindungsgemäßen Verfahrens sind Gegenstand der Unteransprüche.

Bei der Erfindung wird die mit der Zielsetzung eines Kohlenstoffabbaus in der ersten Stufe und einer Nitrifikation in der zweiten Stufe ausgeführte Trennung der Biozönosen, die den Nachteil der Schwierigkeiten bei der Denitrifikation ergibt, durch gezieltes Vermischen der Biozönosen in einer zweistufigen Anlage vermieden. Das gezielte Überführen von belebtem Schlamm aus der ersten Stufe, der einen hohen Sauerstoffverbrauch aufweist, in die zweite Stufe ermöglicht das Einbringen von denitrifizierender Biomasse in die zweite Stufe. Durch dieses geregelte Überführen von Biomasse aus der ersten Stufe in die zweite Stufe tritt eine Vermischung mit der nitrifizierenden Biomasse der zweiten Stufe ein, wodurch es in dieser zweiten Stufe mit der gezielten Bildung einer Mischbiozönose möglich wird, neben der Nitrifikation auch eine Denitrifikation zu erreichen. Dabei ist es von Vorteil, wenn das Überführen von Biomasse von der ersten in die zweite Stufe so gesteuert werden, daß das für die weitgehende Nitrifikation erforderliche Schlammalter eingehalten werden kann.

Im Gegensatz zur Arbeitsweise in einer einstufigen Anlage, in der die Denitrifikation durch die im Abwasser vorliegende Verschmutzung (das Ausmaß der Verschmutzung wird im wesentlichen durch den $BSB_5$-Wert des Abwassers

wiedergegeben) erfolgt, wird die Denitrifikation beim erfindungsgemäßen Verfahren dadurch erreicht, daß denitrifizierende Biomasse aus der ersten Stufe in Form von aktivem, belebtem Schlamm in die zweite Stufe übergeführt wird und dort mit der nitrifizierenden Biomasse der zweiten Stufe eine Mischbiozönose bildet, die sowohl zur Nitrifikation als auch zur Denitrifikation befähigt ist. Die in der ersten Stufe an der Biomasse absorbierten Kohlenstoffverbindungen werden durch das Überführen von aktivem Schlamm in die zweite Stufe eingebracht. Sie dienen dort als weitere Kohlenstoffquelle für die Denitrifikation in der zweiten Stufe.

Das Verhältnis von Nitrifikations- und Denitrifikationsvermögen der gebildeten Mischbiozönosen hängt bei der Erfindung von der Menge des in die zweite Stufe übergeführten Schlammes aus der ersten Stufe ab. Da es sich beim Überführen von Schlamm aus einer Stufe in eine andere Stufe im Vergleich zur Menge des Abwassers um nur kleine Volumsströme handelt (Verhältnis ca. 1:20), tritt keine zusätzliche hydraulische Belastung der Anlage auf.

Bei einer Verminderung der Nitrifikation ist es beim erfindungsgemäßen Verfahren möglich, durch ein Verringern des Volumsstromes der Denitrifikationsbiomasse aus der ersten Stufe sehr rasch eine Verbesserung zu erreichen. Je nach Ausmaß der Vermischung der beiden Biozönosen können beim erfindungsgemäßen Verfahren in der Anlage mit Mischbiozönose Verhältnisse einer einstufigen Anlage (bei sehr weitgehendem Überführen des Schlammes aus der ersten in die zweite Stufe) und Verhältnisse einer zweistufigen Anlage (bei Unterbrechung der Schlammüberführung) eingestellt werden.

In ähnlicher Weise tritt auch ein Vermischen der Biozönose der zweiten Stufe mit der ersten Stufe ein, da belebter Schlamm (z.B. Überschußschlamm) aus der zweiten Stufe in die erste Stufe übergeführt wird. Durch diese Maßnahme werden nitrifizierende Bakterien aus der zweiten Stufe in die erste Stufe übergeführt, in der sie aufgrund der vorherrschenden Verhältnisse (vorhandenes Schlammalter reicht für eine stabile Ansiedlung von nitrifizierenden Bakterien in der ersten Stufe nicht aus) nicht von selbst gehalten werden können. Durch das ständige Einbringen von nitrifizierenden Bakterien in die erste Stufe sind diese jedoch in der Mischbiozönose der ersten Stufe abhängig vom Ausmaß des Rückführens von belebtem Schlamm der zweiten Stufe vorhanden. Durch die in dieser Stufe vorherrschende hohe Konzentration an Ammonstickstoff sind die nitrifizierenden Bakterien hinsichtlich ihrer Umsatzraten jedoch nicht eingeschränkt und können mit nahezu maximaler Geschwindigkeit arbeiten. Im Gegensatz dazu tritt in der zweiten Stufe wegen der dort angestrebten niederen Konzentration an Ammonstickstoff immer eine Verminderung der Umsatzraten aufgrund der Monod'schen Beziehung ein:

$$v = v_{max.} \, S/(K_s + S)$$

| | |
|---|---|
| v | Aktuelle Umsatz(Wachstums-)rate |
| $v_{max}$ | Maximale Umsatz(Wachstums-) rate |
| S | Substratkonzentration |
| K | Substratkonzentration bei halbmaximaler Um satzrate |

Durch diese Tatsache kann im aeroben Teil der ersten Stufe gleichzeitig mit dem Abbau der Kohlenstoffverbindungen auch nitrifiziert werden, wobei das gebildete Nitrat zufolge der hohen Atmungsaktivität des belebten Schlammes in dieser Stufe in den anoxischen Bereichen sehr rasch denitrifiziert wird. Damit wird durch die gezielte Vermischung der Biozönosen der zweiten und der ersten Stufe die in der ersten Stufe vorhandene Belüftungskapazität neben der Entfernung der Kohlenstoffverbindungen auch optimal für die Entfernung von Stickstoffverbindungen durch Nitrifikation und Denitrifikation genutzt, wobei das Ausmaß der Umsetzungen von der Zusammensetzung der Mischbiozönose abhängig ist.

Auch hier reicht die Variationsbreite von rein zweistufigem Betrieb bei Unterbrechung des Rückführens von Biomasse aus der zweiten in die erste Stufe bis zu nahezu einstufigem Betrieb im Falle vollständiger Schlammkreisläufe.

Bei dem Verfahren gemäß der Erfindung kann belebter Schlamm unmittelbar dem Becken, in dem die jeweilige Belebungsstufe (erste bzw. zweite) ausgeführt wird, entnommen werden. Es ist weiters möglich, belebten Schlamm dem Ablauf der ersten bzw. zweiten Belebungsstufe zu entnehmen und der jweils anderen Belebungsstufe zuzuführen. Schließlich kann belebter Schlamm dem der ersten Belebungsstufe nachgeschalteten Zwischenklärbekken entnommen werden und in die zweite Belebungsstufe übergeführt werden. Sinngemäß kann belebter Schlamm am dem der zweiten Belebungsstufe nachgeschalteten Nachklärbecken entnommen und der ersten Belebungsstufe zugeführt werden.

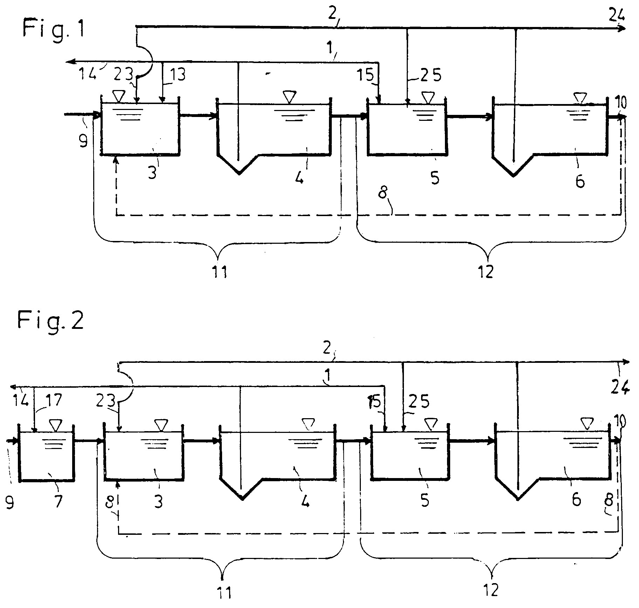

Insgesamt stellt sich das erfindungsgemäße Verfahren beispielsweise wie folgt dar und kann beispielsweise in gemäß den schematisch und beispielhaft in den Fig. 1 und 2 gezeigten Anlagen ausgeführt werden:

Fig. 1 zeigt ein zweistufiges Belebungsverfahren mit Mischbiozönese zur Nitrifikation und Denitrifikation und

Fig. 2 eine Verfahrensvariante mit biologischer Phosphorentfernung.

Es handelt sich um ein zweistufiges Belebtschlammverfahren (Stufen 11 und 12) zur Reinigung von Abwasser, bei dem Abwasser 9, welches in das erste Belebungsbecken 3 eingeführt wird, die wenigstens eine belüftete und wenigstens eine unbelüftete Zone aufweist und mit einem Schlammalter von mindestens 1 bis 5 Tagen ausgelegt und betrieben wird, danach in einem Zwischenklärbecken 4 einer Zwischenklärung unterworfen wird, im Anschluß daran in eine zweite, wenigstens eine belüftete und wenigstens eine unbelüftete Zone aufweisende, mit einem Schlammalter von 3 bis 15 Tagen ausgelegte und betriebene zweite Belebungsbecken 5 eingeführt sowie schließlich in einem Nachklärbecken 6 einer Nachklärung unterworfen und danach abgeführt wird, wobei aus der Zwischenklärung in einem ersten Schlammkreislauf 1 Schlamm abgezogen und teilweise in Form von Rücklaufschlamm 13 in die erste Belebungsstufe zurückgeführt, teilweise als aktive Biomasse in die zweite Belebungsstufe eingeführt (Schlammkreislauf 1) und teilweise als Überschußschlamm 14 aus dem Schlammkreislauf 1 abgezogen wird. Aus der Nachklärung im Nachklärbecken 6 der zweiten Stufe 12 wird in einem zweiten Schlammkreislauf 2 Schlamm abgezogen, teilweise in Form von Rücklaufschlamm 25 in das zweite Belebungsbecken 5 zurückgeführt, teilweise als aktive Biomasse 23 in die erste Stufe 11 zurückgeführt und teilweise als Überschußschlamm 24 aus dem Schlammkreislauf 2 abgezogen.

Dadurch erfolgt die Nitrifikation und Denitrifikation sowohl in der ersten Stufe 11 als auch in der zweiten Stufe 12, die jeweils mindestens ein Belebungsbecken und mindestens ein Absetzbecken beinhalten. Die in der zweiten Stufe 12 gebildete Biomasse wird in die erste Stufe 11 eingeführt, dadurch wird die erste Stufe mit Nitrifikanten geimpft. Damit findet die Nitrifikation auch in der ersten Stufe statt, was normalerweise mit einem aeroben Schlammalter von z.B. zwei Tagen bei einer Abwassertemperatur von l0°C unmöglich ist.

In der ersten Stufe 11 ist Ammonium-Stickstoff in der Regel in einer Konzentration von über 10 mg/l enthalten, daher wachsen die Nitrifikanten mit nahezu maximaler Geschwindigkeit. Gleichzeitig sind hier auch leicht abbaubare Kohlenstoffverbindungen und hoch aktive heterotrophe Bakterien in ausreichendem Maße vorhanden, daher kann der nitrifizierte Stickstoff in derselben Stufe denitrifiziert werden. Gleichzeitig werden in der Regel in der ersten Stufe 11 aus dem Abwasser mehr als 75% der Kohlenstoffverbindungen entfernt. Ein Teil der in der ersten Stufe gebildeten Biomasse 15 wird in die zweite Stufe über den Schlammkreislauf 1 eingeführt. An dieser Biomasse werden reichlich organische Kohlenwasserstoffverbindungen adsorbiert. Die heterotrophen Bakterien, die den Großteil dieser Biomasse ausmachen, werden in den anoxischen Zonen der zweiten Stufe 12 Nitrat als Elektronenacceptor und organische Verbindungen als Elektronendonator benutzen. Dadurch wird die Denitrifikation möglich, was normalerweise bei einer konventionellen zweistufigen Belebungsanlage wegen des Mangels an Kohlenstoffverbindungen und aktiven heterotrophen Bakterien unmöglich ist.

Die Voraussetzung für eine sichere Nitrifikation in einem Belebtschlammsystem ist ein ausreichendes aerobes Schlammalter. Weil in der Regel über 75% der Kohlenstoffverbindungen bereits in der ersten Stufe 11 entfernt werden, wird die Nitrifikation in der zweiten Stufe 12 kaum von organischen Verbindungen beeinträchtigt.

Allenfalls auftretende Schwankungen des Stickstoffgehaltes im zulaufenden Abwasser werden in der ersten Stufe 11 ausgeglichen, wobei in der Regel in dieser Stufe etwa 50% des Stickstoffes entfernt werden. Deshalb ist ein aerobes Schlammalter von 10 Tagen bei einer Abwassertemperatur von lO°C für die zweite Stufe 12 ausreichend, um den Ammonium-Stickstoff im Ablauf kleiner als 2 mg/l zu halten.

Zur biologischen Phosphor-Elimination in Verbindung mit dem erfindungsgemäßen Verfahren, die in einer Anlage gemäß Fig. 2 ausgeführt werden kann, werden drei Grundbedingungen benötigt: anaerobe und aerobe Verhältnisse im Schlammkreislauf, flüchtige Fettsäure und ein geeignetes Schlammalter. In der ersten Stufe dieses Verfahrens sind leicht abbaubare, flüchtige Fettsäuren in der Regel in ausreichendem Maße vorhanden. In einer zusätzlich gebildeten anaeroben Becken 7 können die Polyphosphat akkumulierenden Bakterien die im Polyphosphat gespeicherte Energie zur Aufrechterhaltung ihres Stoffwechsels verwenden, indem sie die leicht abbaubaren, flüchtigen Fettsäuren abbauen und Phosphat in die Lösung freisetzen. In der aeroben Zone werden die Bakterien abgebautes Polyphosphat erneut in die Zelle einlagern, wobei Phosphat aus der Lösung in vermehrtem Ausmaß aufgenommen wird. Um Phosphat im Ablauf kleiner als 1 mg/l zu halten, kann man eine chemische Fällung einsetzen, indem das Fällungsmittel in der ersten Stufe und/oder in der zweiten Stufe zudosiert wird.

Um die gesamte Leistung der erfindungsgemäßen Stickstoffentfernung zu erhöhen, kann ein Teil des Nitrats in dem ersten Belebungsbecken 3 denitrifiziert werden, indem ein Teilstrom des Ablaufes der Nachklärung 4 wieder in die anoxische Zone der ersten Stufe eingeführt wird (siehe strichliert angedeutete Leitung in den Fig. 1 und 2).

Das erfindungsgemäße Verfahren kann beispielsweise die folgenden Merkmale aufweisen:
Betrieb einer zweistufigen Belebungsanlage mit Überführen eines Teiles des in der ersten Stufe 11 gebildeten Schlammes (Überschußschlamm) in die zweite Stufe 12 (Schlammkreislauf 1,15) und Überführen eines Teiles des in der zweiten Stufe 12 gebildeten Schlammes (Überschußschlamm) in die erste Stufe 11 (Schlammkreislauf 2,23), wodurch es in beiden Stufen zur Ausbildung von Mischbiozönosen kommt und einerseits durch den Schlammkreislauf 1 denitrifizierende Biomasse in die zweite Stufe übertragen wird und anderseits nitrifizierende Biomasse durch den Schlammkreislauf 2 in die erste Stufe übergeführt wird und damit sowohl in der ersten Stufe als auch in der zweiten Stufe neben dem Abbau von Kohlenstoffverbindungen die Entfernung von Stickstoffverbindungen durch Nitrifikation und Denitrifikation erfolgen kann.

Das angestrebte Schlammalter in der ersten Stufe 11 beträgt bei einer Abwassertemperatur von lO°C und 50% aerobem Bekkenanteil zwei Tage und kann in Abhängigkeit vom aeroben Anteil des Belebungsbeckens 3 und von der Temperatur des Abwassers zwischen 1 und 5 Tagen variiert werden.

Die sich daraus ergebenden Schlammbelastungen in der ersten Stufe 11 betragen typischerweise 0,4 kg BSB$_5$/kg Trockensubstanz und Tag mit einem Schwankungsbereich von 0,2 - 0,8, wodurch sich bei einem typischen Schlammgehalt von 5 g/l (Bereich 2 - 10 g/l) eine Raumbelastung von 2 kg BSB$_5$/m3 und Tag mit einem Schwankungsbereich von 0,8-4 ergibt.

Das angestrebte Schlammalter in der zweiten Stufe 12 bei einer Abwassertemperatur von 10°C und einem aeroben Beckenanteil von 50% beträgt 10 Tage und kann ebenfalls in Abhängigkeit von der Temperatur und dem aeroben Anteil des Belebungsbeckens 5 zwischen 3 und 15 Tagen variiert werden.

Die sich daraus ergebenden Schlammbelastungen in der zweiten Stufe 12 betragen typischerweise 0,08 kg BSB$_5$/kg Trockensubstanz und Tag mit einem Schwankungsbereich von 0,03 - O,l5, wodurch sich bei einem typischen Schlammgehalt von 5 g/l (Bereich 2 - 10 g/l) eine Raumbelastung von 0,4 kg BSB$_5$/m3 und Tag mit einem Schwankungsbereich von 0,1 - 0,75 ergibt.

Der Anteil von unbelüftetem Beckenvolumen am gesamten Volumen der Belebungsbecken 3,5 der einzelnen Stufen 11 und 12 beträgt typischerweise 30 - 50%, wobei zur Optimierung besonderer Betriebsverhältnisse (Abwasserkonzentration, Temperatur u.a.) auch im Bereich von 10 - 70% gearbeitet werden kann.

Der Schlammkreislauf 1 kann auch durch die bei entsprechend hoher Beschickung des Zwischenklärbeckens 4 im Ablauf der ersten Stufe vorhandenen Schwebstoffe zur Gänze oder teilweise erfolgen.

Der Schlammkreislauf 2 kann auch teilweise durch eine Rückführung von Ablauf aus der Nachklärung ergänzt werden, wobei im Ablauf vorhandenes Nitrat in der ersten Stufe denitrifiziert wird.

Die Entfernung von Phosphorverbindungen ist durch das erfindungsgemäße Verfahren nicht beeinträchtigt und kann entweder durch chemische Fällung, wobei vorzugsweise die Zugabe der Fällungschemikalien überwiegend in die erste Stufe erfolgt, erreicht werden. Mit dem erfindungsgemäßen Verfahren ist aber auch eine biologische Phosphorentfernung durchführbar, indem (vgl. Fig. 2) vor dem Belebungsbecken 3 der Stufe 11 ein unbelüftetes, anaerobes Becken 7, in das der Zulauf und der Rücklaufschlamm der ersten Stufe eingeleitet werden, angeordnet wird. Im anaeroben Teil erfolgt eine Rücklösung von Phosphat und im nachfolgenden aeroben Teil eine vermehrte Aufnahme und damit biologische Entfernung von Phosphat.

Bei erhöhten Anforderungen an die Phosphor-Entfernung (P unter 0,5 mg/l) kann eine Reinigungsstufe mit Flockungsfiltration angeschlossen werden.

Die Entnahme von Überschußschlamm aus dem System erfolgt vorzugsweise aus der ersten Stufe, wobei bei der Anwendung der biologischen P-Entfernung beachtet werden muß, daß es zu keiner Rückführung von P mit Trübwasser aus der Schlammbehandlung kommt. Bei Bedarf kann auch eine Überschußschlammentnahme aus der zweiten Stufe erfolgen.

Bei Bedarf kann das erfindungsgemße Verfahren zusätzlich zu Rechen und Sandfang auch eine mechanische Vorklärstufe enthalten.

Die bei Regen anfallende Mischwassermenge kann nach Maßgabe der Anforderungen bis zu einem Mehrfachen der Trockenwettermenge mitbehandelt werden.

Die Erfindung wird anhand der in Fig. 1 schematisch dargestellten Anlage beispielsweise erläutert:

In einer zweistufig ausgebauten Kläranlage wurde das erfindungsgemäße Verfahren erprobt. Die wesentlichen technischen Daten der Anlage sind nachfolgend genannt:

| Belebungsbecken 3 | 200 m3, | Zwischenbecken 4 | 72 m2(170 m3) |
| Belebungsbecken 5 | 330m3, | Nachklärbecken 6 | 194 m2(650 m3) |

Dazu kommen noch Rechen und Sandfang.

Während der Untersuchungen wurden beide Belebungsbecken 3,5 so betrieben, daß 50% belüftet (aerob) und die restlichen 50% unbelüftet (anoxisch - Sauerstoffversorgung durch Nitrat bzw. anaerob) waren. Zum Zeitpunkt der Untersuchungen war die Anlage mit ca. 6.000 EGW belastet. Bei einem Zulauf von 290 mg/l BSB$_5$ und 45 mg/l TKN (= Total-Kjeldahl-Stickstoff) sowie einer Zulaufmenge von 1250 m3/d entsprechend einer Raumbelastung von 1,8 kg BSB$_5$/m3 und Tag und bei einem Schlammgehalt im Belebungsbecken von 5,1 g/l entsprechend einer Schlammbelastung von 0,35 kg BSB$_5$/kg Trockensubstanz und Tag wurden bei einer Temperatur von IO°C und einem Schlammalter von etwa 2 Tagen in der ersten Stufe 11 folgende Ablaufwerte erhalten:

| BSB$_5$(gelöst) | 25 mg/l |
|---|---|
| TKN | 27 mg/l |

Im Belebungsbecken 5 der zweiten Stufe 12 betrug der Schlammgehalt 5,0 g/l und die sich aus der Schlammeinbringung aus der ersten Stufe und dem Ablauf der Zwischenklärung ergebende Raumbelastung betrug ca. 0,4 kg BSB$_5$/m3 und Tag; die zugehörige Schlammbelastung errechnete sich zu 0,08 kg BSB$_5$/kg Trockensubstanz und Tag und das Schlammalter ergab sich zu etwa zwölf Tagen. Die erzielten Ergebnisse im Ablauf 10 waren:

| BSB$_5$ | 7 mg/l |
|---|---|
| TKN | 2 mg/l |
| NO$_{3-N}$ | 6 mg/l |

Daraus errechnet sich ein Wirkungsgrad für die gesamte Anlage von über 97% für den BSB$_5$ und von 82% für den Stickstoff.

Die Schlammkreisläufe zur Erzielung von Mischbiozönosen in den beiden Belebungsstufen waren dabei so eingestellt, daß ca. 30% der Überschußschlammproduktion der ersten Stufe in die zweite Stufe geleitet wurde (ca. 150 kg/d) und die gesamte überschußschlammproduktion der zweiten Stufe (ca. 140 kg/d) in die erste Stufe zurückgeleitet wurde.

Der Überschußschlamm der gesamten Anlage wurde im beschriebenen Fall nur aus der ersten Stufe 11 entnommen. Bei höheren Abwassertemperaturen kann aus dem Schlammkreislauf 1 eine erhöhte Schlammfracht in die zweite Stufe ohne schädliche Auswirkungen auf die Nitrifikation eingebracht werden, wodurch eine Absenkung des Nitratwertes im Ablauf bis gegen 0 möglich ist und der Wirkungsgrad bezüglich der Stickstoffentfernung bis auf 95% gesteigert werden kann.

Bei der praktischen Anwendung des erfindungsgemäßen Verfahrens kann für die Reinigung von kommunalem Abwasser mit einem vergleichsweise niedrigem spezifischen Belebungsbeckenvolumen von ca. 90 l/EGW gearbeitet werden. Ein typischer Wert für einstufige nach dem Stand der Technik arbeitende Belebungsanlagen mit vergleichbarer Reinigungsleistung (Gesamtstickstoffentfernung über 80%) beträgt ca. 200 l/EGW. Diese hohe Stickstoffentfernung wird von den bekannten zweistufigen Verfahren nicht erreicht.

Ein weiterer Vorteil des erfindungsgemäßen Verfahrens liegt in der Tatsache, daß bei der Erweiterung bestehender Anlagen zur Stickstoffentfernung die bestehenden Becken weitgehend in das neue Verfahren eingegliedert werden können, wobei die bestehende Belebungsstufe je nach den Beckenvolumina und Abwasserverhältnissen sowohl als erste oder als zweite Stufe verwenden werden können.

**Patentansprüche**

1.  Belebtschlammverfahren zur Reinigung von Abwasser, bei dem das Abwasser in ein erstes Belebungsbecken mit Zwischenklärung eingeführt wird, im Anschluß daran in ein zweites Belebungbecken mit Nachklärung eingeführt und danach abgeführt wird, bei dem Schlamm aus der Zwischenklärung in das erste Belebungsbecken und aus der Nachklärung in das zweite Belebungsbecken rückgeführt, sowie Überschußschlamm aus wenigstens einer Belebungsstufe aus dem Schlammkreislauf entfernt wird, dadurch gekennzeichnet, daß das erste und zweite Belebungsbecken nur teilweise belüftet sind und sowohl ein Teil des in der ersten Belebungsstufe gebildeten, Überschußschlammes in die zweite Belebungsstufe als auch wenigstens ein Teil des in der zweiten Belebungsstufe gebildeten, Überschußschlammes in die erste Belebungsstufe übergeführt wird so daß sowohl in der ersten Belebungsstufe als auch in der zweiten Belebungsstufe neben dem Abbau von Kohlenstoffverbindungen ein Abbau von Stickstoffverbindungen durch Nitrifikation und Denitrifikation ausgeführt wird.

2.  Verfahren nach Anspruch 1, dadurch gekennzeichnet, daß die erste Belebungsstufe mit einem Schlammalter zwischen l und 5 Tagen betrieben wird.

3. Verfahren nach Anspruch 2, dadurch gekennzeichnet, daß die erste Belebungsstufe bei einer Abwassertemperatur von 10°C und 50% aerobem Beckenanteil des Belebungsbeckens mit einem Schlammalter von 2 Tagen betrieben wird.

4. Verfahren nach einem der Ansprüche 1 bis 3, dadurch gekennzeichnet, daß die erste Belebungsstufe mit einer Schlammbelastung von 0,2 bis 0,8, vorzugsweise 0,4 kg $BSB_5$/kg Trockensubstanz und Tag betrieben wird.

5. Verfahren nach einem der Ansprüche 1 bis 4, dadurch gekennzeichnet, daß die erste Belebungsstufe mit einem Schlammgehalt von 2 bis 10, vorzugsweise 5 g/l und einer Raumbelastung von 0,8 bis 4, vorzugsweise 2 kg $BSB_5$/m$^3$ und Tag betrieben wird.

6. Verfahren nach einem der Ansprüche 1 bis 5, dadurch gekennzeichnet, daß die zweite Belebungsstufe mit einem Schlammalter zwischen 3 und l5 Tagen betrieben wird.

7. Verfahren nach Anspruch 6, dadurch gekennzeichnet, daß die zweite Belebungsstufe bei einer Abwassertemperatur von 1O°C und 50% aerobem Beckenanteil des Belebungsbeckens mit einem Schlammalter von 10 Tagen betrieben wird.

8. Verfahren nach einem der Ansprüche 1 bis 7, dadurch gekennzeichnet, daß die zweite Belebungsstufe mit einer Schlammbelastung von 0,03 bis 0,15, vorzugsweise 0,08 kg $BSB_5$/kg Trockensubstanz und Tag betrieben wird.

9. Verfahren nach einem der Ansprüche 1 bis 8, dadurch gekennzeichnet, daß die zweite Belebungsstufe mit einem Schlammgehalt von 2 bis 10 g/l, vorzugsweise 5 g/l, und mit einer Raumbelastung von 0,1 bis 0,75, vorzugsweise 0,4 kg $BSB_5$/m3 und Tag betrieben wird.

10. Verfahren nach einem der Ansprüche 1 bis 9, dadurch gekennzeichnet, daß die einzelnen Belebungsstufen mit einem Anteil von 10 bis 70, insbesondere 20 bis 60 und vorzugsweise 30 bis 50% an unbelüftetem Beckenvolumen, bezogen auf das Gesamtvolumen der jeweiligen Belebungsbecken betrieben werden.

11. Verfahren nach einem der Ansprüche 1 bis 10, dadurch gekennzeichnet, daß Schlamm aus der ersten Belebungsstufe dem Belebungsbecken, dessen Ablauf und/oder der nachgeschalteten Zwischenklärung entnommen und in die zweite Belebungsstufe übergeführt wird.

12. Verfahren nach einem der Ansprüche l bis 11, dadurch gekennzeichnet, daß Schlamm aus der zweiten Belebungsstufe dem Belebungsbecken, dessen Ablauf und/oder der nachgeschalteten Nachklärung entnommen und in die erste Belebungsstufe übergeführt wird.

13. Verfahren nach einem der Ansprüche 1 bis 12, dadurch gekennzeichnet, daß Schlamm der ersten Belebungsstufe dem Belebungsbecken, in dem die erste Stufe ausgeführt wird, entnommen wird.

14. Verfahren nach einem der Ansprüche 1 bis 13, dadurch gekennzeichnet, daß Schlamm der zweiten Belebungsstufe dem Belebungsbecken, in dem die zweite Stufe ausgeführt wird, entnommen wird.

15. Verfahren nach einem der Ansprüche 1 bis 14, dadurch gekennzeichnet, daß der aus der Nachklärung der zweiten Belebungsstufe austretende Ablauf in die erste Belebungsstufe rückgeführt wird.

16. Verfahren nach Anspruch 15, dadurch gekennzeichnet, daß der Ablauf in einer Menge von 30 bis 50 % bezogen auf den Zulauf an Abwasser in die erste Belebungsstufe rückgeführt wird.

17. Verfahren nach einem der Ansprüche 1 bis 16, da-durch gekennzeichnet, daß gleichzeitig belebter Schlamm der ersten Belebungsstufe in die zweite Belebungsstufe und belebter Schlamm der zweiten Belebungsstufe in die erste Belebungsstufe übergeführt wird.

**Claims**

1. An activated sludge process for treating waste water, in which the waste water is ducted into a first activating trough with intermediate clearing and thereafter ducted into a second activating trough with post-clearing and thereafter discharged, whereby the sludge is fed back from the intermediate clearing into the first activating trough and from the post-clearing into the second activating trough, and surplus sludge of at least one activating stage is removed from the sludge circulation,
**characterized in that** the first and second activated trough are only partially aerated and both a portion of the surplus sludge formed in the first activating stage is transferred into the second activating stage and at least a portion of the surplus sludge formed in the second activating stage is transferred into the first activating stage, so that, apart from decomposition of carbon composites, nitrogen composites are decomposed by nitrification and denitrification in both the first activating stage and in the second activating stage.

2. A process according to claim 1, **characterized in that** the first activating stage is operated with a sludge age between 1 and 5 days.

3. A process according to claim 2, **characterized in that** the first activating stage is carried out at a waste-water temperature of 10°C and 50% aerobic trough portion of the activating trough at a sludge age of 2 days.

4. A process according to one of claims 1 to 3, **characterized in that** the first activating stage is carried out with a sludge load between 0.2 and 0.8, preferably 0.4 kg $BSB_5$/kg dry substance per day.

5. A process according to one of claims 1 to 4, **characterized in that** the first activating stage is operated with a sludge content between 2 and 20, preferably 5 g/l and a spatial load between 0.8 and 4, preferably 2 kg $BSB_5$/m$^3$ per day.

6. A process according to one of claims 1 to 5, **characterized in that** the second activating stage is operated at a sludge age between 3 and 15 days.

7. A process according to claim 6, **characterized in that** the second activating stage is operated at a waste-water temperature of 10°C and 50% aerobic trough portion of the activating trough at a sludge age of 10 days.

8. A process according to one of claims 1 to 7, **characterized in that** the second activating stage is operated with a sludge load between 0.03 and 0.15, preferably 0.08 kg $BSB_5$/kg dry substance per day.

9. A process according to one of claims 1 to 8, **characterized in that** the second activating stage is operated with a sludge content between 2 and 10 g/l, preferably 5 g/l, and with a spatial load between 0.1 and 0.75, preferably 0.4 kg $BSB_5$/m$^3$ per day.

10. A process according to one of claims 1 to 9, **characterized in that** the individual activating stages are operated with a portion between 10 and 70, in particular between 20 and 60 and preferably between 30 and 50% of not aerated trough volume relative to the total volume of the respective activating troughs.

11. A process according to one of claims 1 to 10, **characterized in that** sludge of the first activating stage is taken from the activating trough, its outlet and/or the downstream intermediate settling and transferred to the second activating stage.

12. A process according to one of claims 1 to 11, **characterized in that** the sludge of the second activating stage is taken from the activating trough, its outlet and/or the downstream post-settling and transferred to the first activating stage.

13. A process according to one of claims 1 to 12, **characterized in that** the sludge of the first activating stage is taken from the activating trough in which the first stage was carried out.

14. A process according to one of claims 1 to 13, **characterized in that** sludge of the second activating stage is taken from the activating trough in which the second stage was carried out.

15. A process according to one of claims 1 to 14, **characterized in that** the discharge exiting from post-clearing of the second activating stage is fed back into the first activating stage.

16. A process according to claim 15, **characterized in that** the discharge is fed back into the first activating stage at a volume between 30 and 50% relative to the delivery of waste water.

17. A process according to one of claims 1 to 16, **characterized in that** activated sludge of the first activating stage is transferred into the second activating stage simultaneously with activated sludge of the second activating stage being transferred into the first activating stage.

**Revendications**

1. Procédé d'épuration par boues activées pour la purification d'eaux usées dans lequel on introduit les eaux usées dans un premier bassin d'activation avec clarification intermédiaire, après cela on les introduit dans un deuxième bassin d'activation avec clarification finale et on les évacue après cela, et dans lequel la boue provenant de la clarification intermédiaire dans le premier bassin d'activation et provenant de la clarification finale dans le second bassin d'activation est recyclée, tandis que de la boue excédentaire, provenant d'au moins un étage d'activation, est extraite du circuit de la boue, caractérisé en ce que les premier et second bassins d'activation sont aérés seulement partiellement et en ce qu'une partie de la boue excédentaire formée dans le premier étage d'activation est transportée dans le second étage d'activation tandis qu'au moins une partie de la boue excédentaire formée dans le second étage d'activation est transportée dans le premier étage d'activation de telle façon qu'aussi bien dans le premier étage d'activation qu'également dans le second étage d'activation ait lieu, à côté de la décomposition des liaisons du carbone, une décomposition des liaisons de l'azote par nitrification et dénitrification.

2. Procédé suivant la revendication 1 caractérisé en ce que le premier étage d'activation fonctionne avec une boue d'un age compris entre un et cinq jours.

3. Procédé suivant la revendication 2 caractérisé en ce que le premier étage d'activation fonctionne, dans le cas d'une température des eaux usées de 10°C et d'une partie aérobie du bassin égale à 50% du bassin d'activation, avec une boue ayant un age de deux jours.

4. Procédé suivant l'une quelconque des revendications 1 à 3 caractérisé en ce que le premier étage d'activation fonctionne avec une charge de la boue allant de 0,2 à 0,8 et étale de préférence à 0,4 kg de D.B.0.$_5$ par kg de matière sèche et par jour.

5. Procédé suivant l'une quelconque des revendications 1 à 4 caractérisé en ce que le premier étage d'activation fonctionne avec une teneur de la boue allant de 2 à 10 et de préférence égale à 5 g/livre et avec une charge volumique allant de 0,8 à 4 et de préférence égale à 2 kg de D.B.O.$_5$ par m$^3$ et par jour.

6. Procédé suivant l'une quelconque des revendications 1 à 5 caractérisé en ce que le deuxième étage d'activation fonctionne avec une boue d'un age compris entre trois et quinze jours.

7. Procédé suivant la revendication 6 caractérisé en ce que le second étage d'activation fonctionne, dans le cas d'une température des eaux usées de 10°C et d'une partie aérobie du bassin égale à 50% du bassin d'activation, avec une boue ayant un age de dix jours.

8. Procédé suivant l'une quelconque des revendications 1 à 7 caractérisé en ce que le second étage d'activation fonctionne avec une charge de la boue allant de 0,03 à 0,15 et égale de préférence à 0,08 kg de D.B.0.$_5$ par kg de matière sèche et par jour.

9. Procédé suivant l'une quelconque des revendications 1 à 8 caractérisé en ce que le second étage d'activation fonctionne avec une teneur de la boue allant de 2 à 10 et de préférence égale à 5 g/livre et avec une charge volumique allant de 0,1 à 0,75 et de préférence égale à 0,4 kg de D.B.O.$_5$ par m$^3$ et par jour.

10. Procédé suivant l'une quelconque des revendications 1 à 9 caractérisé en ce que les étages d'activation individuels fonctionnent avec un pourcentage du volume de bassin non aéré qui va de 10 à 70, en particulier de 20 à 60 et de préférence de 30 à 50% par rapport un volume total de chaque bassin d'activation.

11. Procédé suivant l'une quelconque des revendications 1 à 10 caractérisé en ce que la boue sortant du premier étage d'activation est prélevée à partir du bassin d'activation, de sa décharge et/ou de la clarification intermédiaire suivante et elle est transportée dans le second étage d'activation.

12. Procédé suivant l'une quelconque des revendications 1 à 11 caractérisé en ce que la boue sortant du second étage d'activation est prélevée à partir du bassin d'activation, de sa décharge et/ou de la clarification intermédiaire suivante et elle est transportée dans le premier étage d'activation.

13. Procédé suivant l'une quelconque des revendications 1 à 12 caractérisé en ce que la boue du premier étage d'activation est prélevée à partir du bassin d'activation dans lequel est exécuté le premier étage d'activation.

**14.** Procédé suivant l'une quelconque des revendications 1 à 13 caractérisé en ce que la boue du second étage d'activation est prélevée à partir du bassin d'activation dans lequel est exécuté le second étage d'activation.

**15.** Procédé suivant l'une quelconque des revendications 1 à 14 caractérisé en ce que l'écoulement sortant de la clarification finale du second étage d'activation est recyclé dans le premier étage d'activation.

**16.** Procédé suivant la revendication 15 caractérisé en ce que l'écoulement de sortie est recyclé en une quantité allant de 30 à 50% par rapport au débit d'admission des eaux usées dans le premier étage d'activation.

**17.** Procédé suivant l'une quelconque des revendications 1 à 16 caractérisé en ce qu'en même temps la boue activée du premier étage d'activation est transportée dans le second étage d'activation tandis que la boue activée du second étage d'activation est transportée dans le premier étage d'activation.

Fig.1

Fig.2